# EUROPEAN PATENT APPLICATION

(11) **EP 4 358 639 A1**
(43) Date of publication of application: **24.04.2024**
(21) Application number: 21945464.2
(22) Date of filing: 16.06.2021
(51) Int. Cl.: H04W 76/28, H04L 1/18

(54) **DRX TIMER START METHOD AND APPARATUS, COMMUNICATION DEVICE, AND STORAGE MEDIUM**

(71) Applicant: Beijing Xiaomi Mobile Software Co., Ltd., Beijing 100085 (CN)
(72) Inventor: JIANG, Xiaowei, Beijing 100085 (CN)
(74) Representative: dompatent von Kreisler Selting Werner - Partnerschaft von Patent- und Rechtsanwälten mbB
(86) International application number: PCT/CN2021/100452
(87) International publication number: WO 2022/261877

(57) **Abstract**

Embodiments of the present disclosure provide a DRX timer start method. The method is executed by a terminal and comprises: starting a discontinuous reception (DRX) timer according to a transmission type of uplink transmission and/or downlink transmission. In the embodiments of the present disclosure, the setting of the DRX timer may be adapted to the transmission type, so that during DRX transmission, the timing time of the DRX timer may be more accurate, and thus the DRX is more reliable.

## Description

### TECHNICAL FIELD

The disclosure relates to but not limited to the field of wireless communication technologies, and particularly to a method and an apparatus for starting a discontinuous reception (DRX) timer, a communication device, and a storage medium.

### BACKGROUND

In a wireless communication process, when a transmitter transmits information to a receiver, the receiver may transmit a hybrid automatic repeat request (HARQ) feedback to the transmitter and the transmitter may determine according to the HARQ feedback whether it needs to retransmit information to the receiver.

In non-terrestrial networks (NTN), a terminal and a base station may communicate with a device located in the air such as a satellite. However, since the satellite is usually located at a higher position, there may be a large delay in communication through the satellite, which may affect a process where the receiver transmits the HARQ feedback to the transmitter. Therefore, a solution disabling that the receiver transmits the HARQ feedback to the transmitter is proposed. In the related art, when the above solution is used, it is a problem to be considered how to set a discontinuous reception (DRX) timer in DRX transmission.

### SUMMARY

A method and an apparatus for starting a discontinuous reception (DRX) timer, a communication device, and a storage medium are provided in embodiments of the disclosure.

According to a first aspect of embodiments of the disclosure, a method for starting a DRX timer is provided and performed by a terminal. The method includes starting the DRX timer according to a transmission type of an uplink transmission and/or a downlink transmission.

In some embodiments, the transmission type includes one of: an uplink transmission based on configured grant (CG); an uplink transmission based on physical downlink control channel (PDCCH) dynamic scheduling; a downlink transmission based on PDCCH dynamic scheduling; or a downlink transmission based on configured downlink assignment.

In some embodiments, the DRX timer includes at least one of: a DRX hybrid automatic repeat request (HARQ) round-trip-time (RTT) timer; or a DRX retransmission timer.

In some embodiments, the method further includes: determining the transmission type of the uplink transmission is the uplink transmission based on CG; and increasing a timing period of an uplink DRX HARQ RTT timer by a predetermined duration.

In some embodiments, increasing the timing period of the uplink DRX HARQ RTT timer by the predetermined duration includes: in response to an HARQ retransmission being disabled, increasing the timing period of the uplink DRX HARQ RTT timer by the predetermined duration; or in response to an HARQ blind retransmission being allowed, increasing the timing period of the uplink DRX HARQ RTT timer by the predetermined duration; or in response to a network configuring the timing period of the uplink DRX HARQ RTT timer to be increased by the predetermined duration, increasing the timing period of the uplink DRX HARQ RTT timer by the predetermined duration.

In some embodiments, starting the DRX timer includes: starting the uplink DRX HARQ RTT timer; and in response to the uplink DRX HARQ RTT timer timing out, starting an uplink DRX retransmission timer.

In some embodiments, the method further includes: determining the transmission type of the uplink transmission is the uplink transmission based on CG; and setting a timing period of an uplink DRX HARQ RTT timer to a preset value.

In some embodiments, setting the timing period of the uplink DRX HARQ RTT timer to the preset value includes: in response to an HARQ retransmission being disabled, setting the timing period of the uplink DRX HARQ RTT timer to the preset value; or in response to an HARQ blind retransmission being allowed, setting the timing period of the uplink DRX HARQ RTT timer to the preset value; or in response to a network configuring the timing period of the uplink DRX HARQ RTT timer to be the preset value, setting the timing period of the uplink DRX HARQ RTT timer to the preset value.

In some embodiments, starting the DRX timer includes: starting the uplink DRX HARQ RTT timer; and starting an uplink DRX retransmission timer after a predetermined duration when the uplink DRX HARQ RTT timer times out; or increasing a timing period of an uplink DRX retransmission timer by a predetermined duration when the uplink DRX HARQ RTT timer times out; and starting the uplink DRX retransmission timer.

In some embodiments, the method further includes: determining the transmission type of the uplink transmission is the uplink transmission based on CG; and disabling an uplink DRX HARQ RTT timer.

In some embodiments, disabling the uplink DRX HARQ RTT timer includes: in response to an HARQ retransmission being disabled, disabling the uplink DRX HARQ RTT timer; or in response to an HARQ blind retransmission being allowed, disabling the uplink DRX HARQ RTT timer; or in response to a network configuring the timing period of the uplink DRX HARQ RTT timer to be the preset value, disabling the uplink DRX HARQ RTT timer.

In some embodiments, starting the DRX timer includes: starting an uplink DRX retransmission timer after a predetermined duration when the uplink DRX HARQ RTT timer is disabled; or increasing a timing period of an uplink DRX retransmission timer by a predetermined duration when the uplink DRX HARQ RTT timer is disabled; and starting the uplink DRX retransmission timer.

In some embodiments, the method further includes determining the transmission type of the uplink transmission is the uplink transmission based on PDCCH dynamic scheduling.

Starting the DRX timer includes starting an uplink DRX retransmission timer and/or an uplink DRX HARQ RTT timer according to a predetermined processing pattern.

In some embodiments, starting the uplink DRX retransmission timer according to the predetermined processing pattern includes: in response to an HARQ retransmission being disabled, starting the uplink DRX retransmission timer according to the predetermined processing pattern; or in response to an HARQ blind retransmission being allowed, starting the uplink DRX retransmission timer according to the predetermined processing pattern; or in response to a network configuring to disable the uplink DRX HARQ RTT timer, starting the uplink DRX retransmission timer according to the predetermined processing pattern.

In some embodiments, the predetermined processing pattern includes: a pattern of starting the uplink DRX retransmission timer after receiving data on the PDCCH; or a pattern of starting the uplink DRX retransmission timer from a first orthogonal frequency division multiplexing (OFDM) symbol after the uplink transmission ends; or a pattern of starting the uplink DRX retransmission timer from an initial OFDM symbol of the uplink transmission; or a pattern of starting the uplink DRX retransmission timer from a first OFDM symbol after a first retransmission of the uplink transmission; or a pattern of starting the uplink DRX retransmission timer after generating a corresponding physical uplink shared channel (PUSCH) data packet according to a PDCCH indication; or a pattern of starting the uplink DRX retransmission timer after a processing delay when data on the PDCCH are received.

In some embodiments, starting the uplink DRX HARQ RTT timer according to the predetermined processing pattern includes: in response to an HARQ retransmission being disabled, starting the uplink DRX HARQ RTT timer according to the predetermined processing pattern; or in response to an HARQ blind retransmission being allowed, starting the uplink DRX HARQ RTT timer according to the predetermined processing pattern; or in response to a network configuring a timing period of the uplink DRX HARQ RTT timer to be a preset value, starting the uplink DRX HARQ RTT timer according to the predetermined processing pattern.

In some embodiments, the predetermined processing pattern includes: a pattern of starting the uplink DRX HARQ RTT timer after receiving data on the PDCCH; or a pattern of starting the uplink DRX HARQ RTT timer from a first OFDM symbol after the uplink transmission ends; or a pattern of starting the uplink DRX HARQ RTT timer from an initial OFDM symbol of the uplink transmission; or a pattern of starting the uplink DRX HARQ RTT timer from a first OFDM symbol after a first retransmission of the uplink transmission; or a pattern of starting the uplink DRX HARQ RTT after generating a corresponding PUSCH data packet according to a PDCCH indication; or a pattern of starting the uplink DRX HARQ RTT timer after a processing delay when the PDCCH is received.

In some embodiments, the method further includes: determining the transmission type of the downlink transmission is the downlink transmission based on PDCCH dynamic scheduling.

Starting the DRX timer includes: starting a downlink DRX retransmission timer and/or a downlink DRX HARQ RTT timer according to a predetermined processing pattern.

In some embodiments, starting the downlink DRX retransmission timer according to the predetermined processing pattern includes: in response to an HARQ retransmission being disabled, starting the uplink DRX retransmission timer according to the predetermined processing pattern; or in response to an HARQ blind retransmission being allowed, starting the uplink DRX retransmission timer according to the predetermined processing pattern; or in response to a network configuring to disable the downlink DRX HARQ RTT timer, starting the uplink DRX retransmission timer according to the predetermined processing pattern.

In some embodiments, the predetermined processing pattern includes: a pattern of starting the downlink DRX retransmission timer after receiving data on the PDCCH; or a pattern of starting the downlink DRX retransmission timer from a first OFDM symbol after the downlink transmission ends; or a pattern of starting the downlink DRX retransmission timer from an initial OFDM symbol of the downlink transmission; or a pattern of starting the downlink DRX retransmission timer from a first OFDM symbol after a first retransmission of the downlink transmission; or a pattern of starting the downlink DRX retransmission timer after a processing delay when the PDCCH is received.

In some embodiments, starting the downlink DRX HARQ RTT timer according to the predetermined processing pattern includes: in response to an HARQ retransmission being disabled, starting the downlink DRX HARQ RTT timer according to the predetermined processing pattern; or in response to an HARQ blind retransmission being allowed, starting the downlink DRX HARQ RTT timer according to the predetermined processing pattern; or in response to a network configuring a timing period of the downlink DRX HARQ RTT timer to be a preset value, starting the downlink DRX HARQ RTT timer according to the predetermined processing pattern.

In some embodiments, the predetermined processing pattern includes: a pattern of starting the downlink DRX HARQ RTT timer after receiving data on the PDCCH; or a pattern of starting the downlink DRX HARQ RTT timer from a first OFDM symbol after the downlink transmission ends; or a pattern of starting the downlink DRX HARQ RTT timer from an initial OFDM symbol of the downlink transmission; or a pattern of starting the downlink DRX HARQ RTT timer from a first OFDM symbol after a first retransmission of the downlink transmission; or a pattern of starting the downlink DRX HARQ RTT timer after a processing delay when the PDCCH is received.

In some embodiments, the method further includes determining the transmission type of the downlink transmission is the downlink transmission based on configured downlink assignment.

Starting the DRX timer includes: starting a downlink DRX retransmission timer and/or a downlink DRX HARQ RTT timer according to a predetermined processing pattern.

In some embodiments, starting the downlink DRX HARQ RTT timer according to the predetermined processing pattern includes: in response to an HARQ retransmission being disabled, starting the downlink DRX HARQ RTT timer according to the predetermined processing pattern; or in response to an HARQ blind retransmission being allowed, starting the downlink DRX HARQ RTT timer according to the predetermined processing pattern; or in response to a network configuring to disable the downlink DRX HARQ RTT timer, starting the downlink DRX HARQ RTT timer according to the predetermined processing pattern.

In some embodiments, the predetermined processing pattern includes: a pattern of starting the downlink DRX retransmission timer from a first OFDM symbol after the downlink transmission ends; or a pattern of starting the downlink DRX retransmission timer from an initial OFDM symbol of the downlink transmission; or a pattern of starting the downlink DRX retransmission timer from a first OFDM symbol after a first retransmission of the downlink transmission; or a pattern of starting the downlink DRX retransmission timer after a processing delay when the PDSCH is received.

In some embodiments, starting the downlink DRX HARQ RTT timer according to the predetermined processing pattern includes: in response to an HARQ retransmission being disabled, starting the downlink DRX HARQ RTT timer according to the predetermined processing pattern; or in response to an HARQ blind retransmission being allowed, starting the downlink DRX HARQ RTT timer according to the predetermined processing pattern; or in response to a network configuring to disable the downlink DRX HARQ RTT timer, starting the downlink DRX HARQ RTT timer according to the predetermined processing pattern.

In some embodiments, the predetermined processing pattern includes: a pattern of starting the downlink DRX HARQ RTT timer from a first OFDM symbol after the downlink transmission ends; or a pattern of starting the downlink DRX HARQ RTT timer from an initial OFDM symbol of the downlink transmission; or a pattern of starting the downlink DRX HARQ RTT timer from a first OFDM symbol after a first retransmission of the downlink transmission; or a pattern of starting the downlink DRX HARQ RTT timer after a processing delay when the PDSCH is received.

According to a second aspect of embodiments of the disclosure, an apparatus for starting a DRX timer is provided. The apparatus includes a processing module, configured to start the DRX timer according to a transmission type of an uplink transmission and/or a downlink transmission.

According to a third aspect of embodiments of the disclosure, a communication device is provided and includes: a processor; and a memory for storing instructions executable by the processor; in which the processor is configured to perform the method as described in the above any embodiment when executing the executable instructions.

According to a fourth aspect of embodiments of the disclosure, a computer storage medium stored with computer executable instructions is provided. When the executable instructions are executed by a processor, the method as described in the above any embodiment is realized.

In embodiments of the disclosure, the DRX timer is started according to the transmission type of the uplink transmission and/or the downlink transmission. The operation of starting the DRX timer may be determined based on the transmission type of the uplink transmission and/or the downlink transmission. Compared with an operation of starting the DRX timer in a fixed way, the operation of starting the DRX timer may be adapted to the transmission type of the uplink transmission and/or the downlink transmission, so that the setting of the DRX timer may be adapted to the transmission type, timing of the DRX timer is more accurate, and the DRX is more reliable.

### BRIEF DESCRIPTION OF THE DRAWINGS

FIG. 1 is a diagram illustrating a structure of a wireless communication system according to some embodiments.
FIG. 2 is a diagram illustrating a wireless communication in a transparent mode according to some embodiments.
Fig. 3 is a diagram illustrating a wireless communication in a regenerative mode according to some embodiments.
FIG. 4 is a flowchart illustrating a method for starting a DRX timer according to some embodiments.
FIG. 5 is a flowchart illustrating a method for starting a DRX timer according to some embodiments.
FIG. 6 is a flowchart illustrating a method for starting a DRX timer according to some embodiments.
FIG. 7 is a flowchart illustrating a method for starting a DRX timer according to some embodiments.
FIG. 8 is a flowchart illustrating a method for starting a DRX timer according to some embodiments.
FIG. 9 is a flowchart illustrating a method for starting a DRX timer according to some embodiments.
FIG. 10 is a flowchart illustrating a method for starting a DRX timer according to some embodiments.
FIG. 11 is a flowchart illustrating a method for starting a DRX timer according to some embodiments.
FIG. 12 is a flowchart illustrating a method for starting a DRX timer according to some embodiments.
FIG. 13 is a flowchart illustrating a method for starting a DRX timer according to some embodiments.
FIG. 14 is a flowchart illustrating a method for starting a DRX timer according to some embodiments.
FIG. 15 is a flowchart illustrating a method for starting a DRX timer according to some embodiments.
FIG. 16 is a flowchart illustrating a method for starting a DRX timer according to some embodiments.
FIG. 17 is a diagram illustrating an apparatus for starting a DRX timer according to some embodiments.
FIG. 18 is a diagram illustrating a terminal according to some embodiments.
FIG. 19 is a block diagram illustrating a base station according to some embodiments.

### DETAILED DESCRIPTION

Reference will now be made in detail to embodiments, examples of which are illustrated in the accompanying drawings. The following description refers to the accompanying drawings in which the same numbers in different drawings represent the same or similar elements unless otherwise represented. The implementations set forth in the following description of the embodiments do not represent all implementations consistent with the embodiments of the disclosure. Instead, they are merely examples of apparatuses and methods consistent with aspects related to the disclosure as recited in the appended claims.

The terms used in embodiments of the disclosure are only for the purpose of describing specific embodiments and are not intended to limit the embodiments of the disclosure. The singular forms of "a", "said" and "the" used in the embodiments of the disclosure and appended claims are also intended to include the plural forms, unless the context clearly indicates other meanings. It should also be understood that the term "and/or" as used herein refers to and includes any or all possible combinations of one or more associated listed items.

It should be understood that although the terms first, second, and third may be used in embodiments of the disclosure to describe various information, the information should not be limited to these terms. These terms are only used to distinguish the same type of information from each other. For example, without departing from the scope of the embodiments of the disclosure, the first information may also be referred to as the second information, and similarly, the second information may also be referred to as the first information. Depending on the context, the word "if' as used herein may be interpreted as "when", "while" or "in response to determining".

The term used herein is "greater than" or "less than" when representing a size relationship for purposes of conciseness and ease of understanding. However, it should be understood for those skilled in the art that the term "greater than" covers the meaning of "greater than or equal to" and "less than" covers the meaning of "less than or equal to".

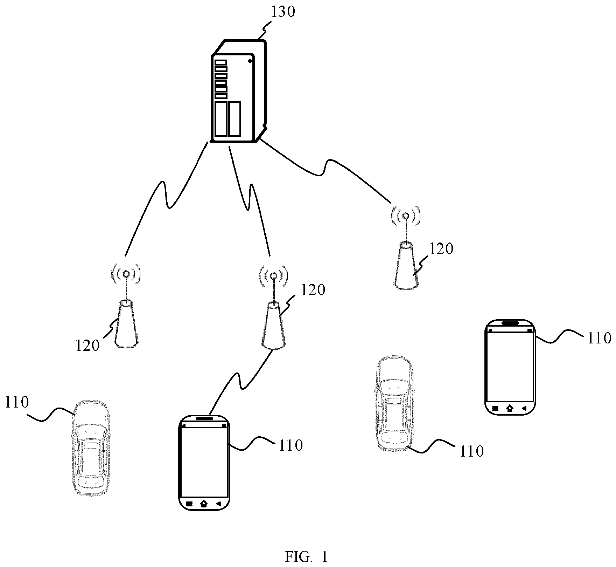

With reference to FIG. 1, FIG. 1 is a diagram illustrating a structure of a wireless communication system according to some embodiments of the disclosure. As illustrated in FIG. 1, the wireless communication system is a communication system based on mobile communication technologies. The wireless communication system may include user equipments (UEs) 110 and base stations 120.

The UE 110 may be a device that provides speech and/or data connectivity for a user. The UE 110 may communicate with one or more core networks via a radio access network (RAN). The UE 110 may be an Internet of Things terminal, such as a sensor device, a mobile phone, and a computer having an Internet of Things terminal, for example, a fixed, portable, pocket-sized, handheld, computer built-in, or vehicle-mounted device. For example, it may be a station (STA), a subscriber unit, a subscriber station, a mobile station, a mobile, a remote station, an access point, a remote terminal, an access terminal, a user terminal, a user agent, a user device, or a user equipment (UE). Alternatively, the UE 110 may also be a device of an unmanned aerial vehicle. Alternatively, the UE 110 also may be a vehicle-mounted device, for example, a trip computer having a wireless communication function or a wireless communication device connected to the trip computer. Alternatively, the UE 110 may also be a roadside device, for example, a street lamp, a signal lamp or other roadside device having the wireless communication function.

The base station 120 may be a network side device in the wireless communication system. The wireless communication system may be the 4th generation mobile communication (4G) system, also known as the long term evolution (LTE) system. The wireless communication system may also be the 5th generation mobile communication (5G) system, also known as the new radio (NR) system or 5G NR system. Alternatively, the wireless communication system may also be a next-generation system of the 5G system. The access network in the 5G system may be called the new generation-radio access network (NG-RAN).

The base station 120 may be an evolved node base station (eNB) used in the 4G system. Alternatively, the base station 120 may also be a next generation node base station (gNB) adopting a centralized and distributed architecture in the 5G system. When the base station 120 adopts the centralized and distributed architecture, it usually includes a central unit (CU) and at least two distributed units (DUs). The central unit is provided with a protocol stack of a Packet Data Convergence Protocol (PDCP) layer, a Radio Link Control (RLC) layer, and a Media Access Control (MAC) layer. The distributed unit is provided with a protocol stack of a Physical (PHY) layer. Embodiments of the disclosure may not limit the implementation manner of the base station 120.

A wireless connection may be established between the base station 120 and the UE 110 through a wireless air interface. In different embodiments, the wireless air interface may be a wireless air interface based on the 4G standard; or the wireless air interface may be a wireless air interface based on the 5G standard, such as the wireless air interface is a new air interface; or the wireless air interface may be a wireless air interface based on the next generation mobile communication network technology standard following the 5G standard.

In some embodiments, an end to end (E2E) link may also be established between the UEs 110, for example, a vehicle to vehicle (V2V) communication, a vehicle to infrastructure (V2I) communication and a vehicle to pedestrian (V2P) communication in a vehicle to everything (V2X) communication.

The above UEs may be referred to as terminal devices in the following embodiments.

In some embodiments, the wireless communication system may further include a network management device 130.

Several base stations 120 are connected to the network management device 130 respectively. The network management device 130 may be a core network device in the wireless communication system. For example, the network management device 130 may be a Mobility Management Entity (MME) in an Evolved Packet Core (EPC). Alternatively, the network management device may be other core network devices, such as a Serving Gateway (SGW), a Public Data Network Gateway (PGW), a Policy and Charging Rules Function, or a Home Subscriber Server (HSS), etc. The implementation form of the network management device 130 is not limited in the embodiments of the disclosure.

In order to facilitate the understanding of those skilled in the art, embodiments of the disclosure list implementation manners to clearly illustrate technical solutions of the embodiments of the disclosure. Those skilled in the art may understand that, embodiments provided in the disclosure may be executed independently, or may be executed in combination with methods in other embodiments of the disclosure, or may be executed independently or by combination and then be executed with some methods in the other related art, which are not be limited in the embodiments of the disclosure.

In order to understand the technical solutions as described in embodiments of the disclosure better, a scenario of wireless network communication is illustrated.

In some embodiments, the information transmission mode may be divided into a transparent mode and a regenerative mode according to different modes of processing signals by satellites.

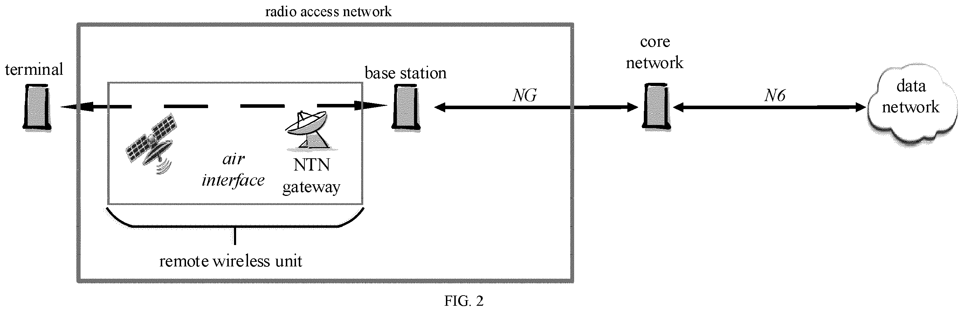

In some embodiments, FIG. 2 is a diagram illustrating a wireless communication in a transparent mode. A non-terrestrial networks (NTN) ground station transmits a signal of a base station to a satellite and the satellite converts the signal to a signal under a satellite band and transmits the signal under the satellite band to a terminal. In addition to performing frequency conversion and signal amplification, the satellite does not demodulate the signal of the base station. In this case, the base station is similar to a relay.

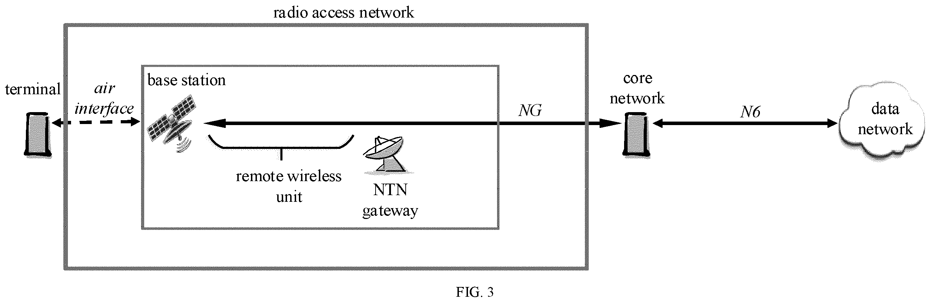

FIG. 3 is a diagram illustrating a wireless communication in a regenerative mode. After the NTN ground station transmits the signal of the base station to the satellite, and the satellite demodulates and decodes the signal, re-encodes and re-modulates the signal to obtain a regenerative signal, and transmits the regenerative signal over the satellite band.

Table 1 illustrates a satellite altitude, a satellite orbit, and a satellite coverage of a typical NTN network.

**Table 1**

| Platforms | Altitude range | Orbit | Coverage |
|---|---|---|---|
| Low-Earth Orbit (LEO) satellite | 300 - 1500 km | Circular around the earth | 100 - 1000 km |
| Medium-Earth Orbit (MEO) satellite | 7000 - 25000 km | | 100 - 1000 km |
| Geostationary Earth Orbit (GEO) satellite | 35 786 km | Keeping position fixed in terms of altitude/orientation with respect to a given earth point | 200 - 3500 km |
| Unmanned Aerial System (UAS) platform (including High Altitude Platform Station (HAPS)) | 8 - 50 km(20 km) | | 5 - 200 km |
| High Elliptical Orbit (HEO) satellite | 400 - 50000 km | Elliptical around the earth | 200 - 3500 km |

In some embodiments, uplink configured grant (CG) is a resource allocation mode relative to uplink dynamic scheduling. An uplink CG resource is a pre-configured uplink resource that may be reused periodically. After the uplink resource is allocated to the terminal, the uplink resource does not need to be indicated to the terminal again by the base station during each subsequent period and the terminal may directly use the uplink resource. Similarly, downlink semi-persistent scheduling (SPS) is similar to the uplink CG and a difference between the downlink SPS and the uplink CG is that the downlink SPS is used for a downlink resource.

In some embodiments, for the uplink CG, each time the terminal transmits uplink new data on a hybrid automatic repeat request (HARQ) process and then the terminal may start a CG timer corresponding to the HARQ process. No other new data may be scheduled on the HARQ process during running of this CG timer. A CG retransmission timer (cg-RetransmissionTimer) may be configured for each CG and is configured for uplink automatic retransmission. The terminal starts the CG retransmission timer corresponding to the HARQ process after transmitting uplink new data or retransmitting data on the HARQ process each time. The uplink automatic retransmission is not performed during running of this timer. The uplink automatic retransmission is performed after this timer stops running. In the related art, the CG retransmission timer is only configured for the terminal itself to select an HARQ identifier corresponding to the CG.

In some embodiments, for the discontinuous reception (DRX) transmission, an uplink DRX HARQ round-trip-time (RTT) timer (drx-HARQ-RTT-TimerUL) is configured to indicate that the terminal may receive a minimum time interval of uplink retransmission scheduling after uplink transmission. It may be started each time the terminal transmits uplink data. After the timer completes running, the uplink DRX retransmission timer (drx-RetransmissionTimer) may be started. The terminal monitors uplink retransmission dynamic scheduling from the base station during running of the uplink DRX retransmission timer. Similarly, the uplink DRX HARQ RTT timer may be configured to indicate that the terminal may receive a minimum time interval of downlink retransmission scheduling after transmitting an uplink feedback of downlink data, and may be started each time the terminal transmits the uplink HARQ feedback of the downlink data, and after this timer completes running, a downlink DRX retransmission timer may be started. The terminal monitors downlink retransmission dynamic scheduling from the base station during running of the downlink DRX retransmission timer.

In some embodiments, in the NTN, a feedback function of the HARQ may be enabled or disabled. If the feedback function of the HARQ is disabled, the opposite end does not perform an HARQ feedback when the transmitter transmits data. Meanwhile, in the NTN, a blind retransmission function is enabled for an HARQ with a feedback function, in which case a transmitter automatically performs one or more numbers of times of blind retransmissions on data.

In some embodiments, for the uplink CG, if the HARQ retransmission used for data transmission is disabled, the terminal does not start the uplink DRX HARQ RTT timer or sets its value to 0, and starts the uplink DRX retransmission timer. However, after the terminal transmits uplink data by adopting the uplink CG, the network may receive the uplink data only after a round trip time (RTT), determine that there is an uplink transmission for the terminal, and perform targeted retransmission dynamic scheduling. Therefore, the network may transmit retransmission scheduling only after the RTT, and a current occasion for starting the uplink DRX HARQ RTT timer is not appropriate.

For an uplink transmission and a downlink transmission scheduled by a physical downlink control channel (PDCCH)and a downlink transmission adopting configured downlink assignment, it's unclear how the terminal starts the DRX HARQ RTT timer or the DRX retransmission timer.

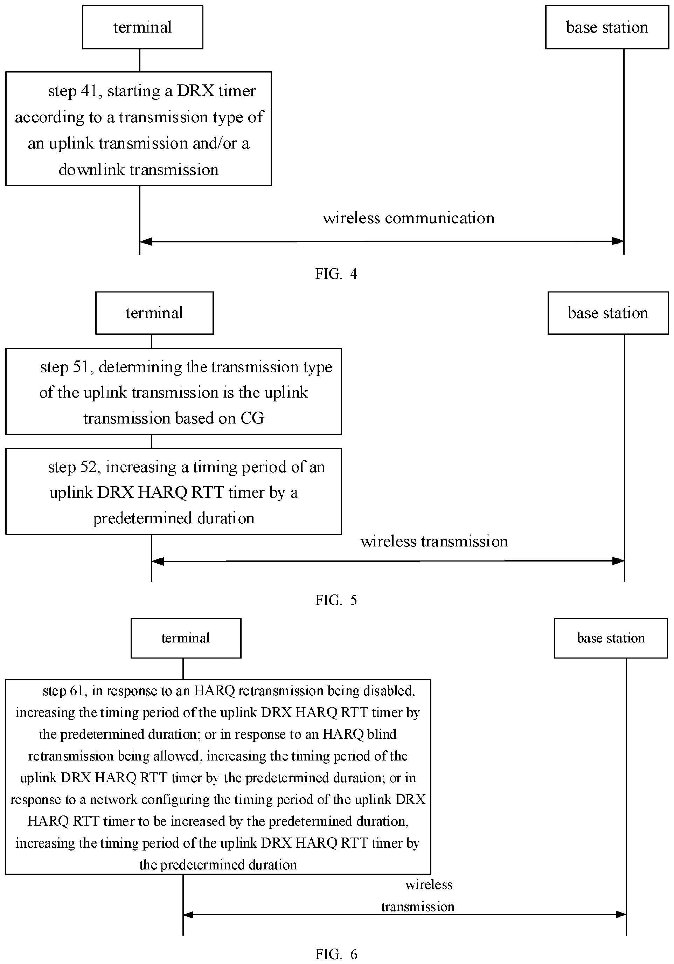

As illustrated in FIG 4, a method for starting a DRX timer is provided in some embodiments and performed by a terminal. The method includes the following step.

At step 41, a DRX timer is started according to a transmission type of an uplink transmission and/or a downlink transmission.

The terminal may be but not limited to a mobile phone, a wearable device, a vehicle-mounted terminal, a road side unit (RSU), a smart home terminal, an industrial sensing device, a medical device, or the like.

There may be various types of base stations such as a 3G network base station, a 4G network base station, a 5G network base station, or other evolutionary base station.

In some embodiments, the transmission type includes at one of: an uplink transmission based on CG; an uplink transmission based on PDCCH dynamic scheduling; a downlink transmission based on PDCCH dynamic scheduling; or a downlink transmission based on configured downlink assignment.

In some embodiments, the CG may be that the base station activates an uplink grant to the terminal once and the terminal always uses a resource specified by the uplink grant for the first time for uplink transmissions when the terminal does not receive deactivation. In some embodiments, the CG includes a first type and a second type. The first type is configured by radio resource control (RRC) via a higher layer signaling; and the second type is that activation and deactivation of the CG is indicated according to downlink control information (DCI) and is used only when activated. Implementation of the configured downlink assignment corresponds to the implementation of the CG but the configured downlink assignment is used for downlink transmissions.

In some embodiments, the uplink PDCCH dynamic scheduling may be that when the terminal needs to transmit uplink data, the terminal needs to transmit a scheduling request to the base station and notifies the network that the terminal needs to transmit data of a logical channel. The base station may transmit uplink scheduling grant to the terminal according to a resource condition of the network when receiving the scheduling request. After the terminal obtains the corresponding uplink scheduling grant, the terminal transmits a buffer status report (BSR) to the base station to inform the base station that data needs to be transmitted. The base station allocates a resource to a terminal according to the BSR information and in combination with a condition of the whole network and transmits the resource to the terminal via the PDCCH uplink scheduling grant. The downlink PDCCH dynamic scheduling corresponds to the uplink PDCCH dynamic scheduling but the downlink PDCCH dynamic scheduling is used for receiving downlink data.

In some embodiments, the DRX timer includes at least one of: a DRX HARQ RTT timer; or a DRX retransmission timer.

In some embodiments, starting the DRX timer may be an operation of starting the DRX timer. The operation of starting the DRX timer may be but not limited to initially setting a period of the DRX timer, updating the period of the DRX timer, and/or starting the DRX timer after a predetermined duration.

In some embodiments, the transmission type of the uplink transmission is the uplink transmission based on CG. When the terminal performs the uplink transmission based on CG, a timing period of an uplink DRX HARQ RTT timer is increased by a predetermined duration (the predetermined duration may be an offset). When the uplink DRX HARQ RTT timer times out, an uplink DRX retransmission timer is started. The value of the predetermined duration may be a round-trip time (RTT) between the terminal and the base station.

In some embodiments, the transmission type of the uplink transmission is the uplink transmission based on CG. When the terminal performs the uplink transmission based on CG, if an HARQ retransmission used for transmission is disabled, or if an HARQ blind retransmission is allowed (that is, the HARQ may perform the blind retransmission without waiting for the decoding result of the physical uplink shared channel (PUSCH)), or if a network configures the timing period of the uplink DRX HARQ RTT timer to be increased by the predetermined duration, the timing period of the uplink DRX HARQ RTT timer is increased by the predetermined duration. When the uplink DRX HARQ RTT timer times out, an uplink DRX retransmission timer is started. The value of the predetermined duration may be a round-trip time (RTT) between the terminal and the base station.

In some embodiments, the transmission type of the uplink transmission is the uplink transmission based on CG. When the terminal performs the uplink transmission based on CG, if an HARQ retransmission used for transmission is disabled, or if an HARQ blind retransmission is allowed (that is, the HARQ may perform the blind retransmission without waiting for the decoding result of the PUSCH), or if a network configures the timing period of the uplink DRX HARQ RTT timer to be a preset value (for example, the preset value is 0), the timing period of the uplink DRX HARQ RTT timer is set to the preset value. An uplink DRX retransmission timer is started after a predetermined duration when the uplink DRX HARQ RTT timer times out. The value of the predetermined duration may be a round-trip time (RTT) between the terminal and the base station.

In some embodiments, the transmission type of the uplink transmission is the uplink transmission based on CG. When the terminal performs the uplink transmission based on CG, if an HARQ retransmission used for transmission is disabled, or if an HARQ blind retransmission is allowed (that is, the HARQ may perform the blind retransmission without waiting for the decoding result of the PUSCH), or if a network configures the timing period of the uplink DRX HARQ RTT timer to be a preset value (for example, the preset value is 0), the timing period of the uplink DRX HARQ RTT timer is set to the preset value. A timing period of an uplink DRX retransmission timer is increased by a predetermined duration when the uplink DRX HARQ RTT timer times out; and the uplink DRX retransmission timer is started. The value of the predetermined duration may be a round-trip time (RTT) between the terminal and the base station.

In some embodiments, the transmission type of the uplink transmission is the uplink transmission based on CG. When the terminal performs the uplink transmission based on CG, if an HARQ retransmission is disabled, or if an HARQ blind retransmission is allowed, or if a network configures the timing period of the uplink DRX HARQ RTT timer to be a preset value, the uplink DRX HARQ RTT timer is disabled. An uplink DRX retransmission timer is started after a predetermined duration when the uplink DRX HARQ RTT timer is disabled. The value of the predetermined duration may be a round-trip time (RTT) between the terminal and the base station.

In some embodiments, the transmission type of the uplink transmission is the uplink transmission based on CG. When the terminal performs the uplink transmission based on CG, if an HARQ retransmission is disabled, or if an HARQ blind retransmission is allowed, or if a network configures the timing period of the uplink DRX HARQ RTT timer to be a preset value, the uplink DRX HARQ RTT timer is disabled. A timing period of an uplink DRX retransmission timer is increased by a predetermined duration when the uplink DRX HARQ RTT timer is disabled; and the uplink DRX retransmission timer is started. The value of the predetermined duration may be a round-trip time (RTT) between the terminal and the base station.

After a time point when the terminal performs the uplink transmission based on CG, it may start from a first orthogonal frequency division multiplexing (OFDM) symbol after a first retransmission of the uplink transmission may start or from the first OFDM symbol after the uplink transmission is completed.

In some embodiments, the transmission type of the uplink transmission is the uplink transmission based on PDCCH dynamic scheduling. When the terminal receives the uplink transmission indicated by the PDCCH, if an HARQ retransmission is disabled, or if an HARQ blind retransmission is allowed (that is, the blind retransmission without waiting for the decoding result of the PUSCH), or if a network configures to disable the uplink DRX HARQ RTT timer, the uplink DRX retransmission timer is started after data on the PDCCH are received; or the uplink DRX retransmission timer is started from a first OFDM symbol after the uplink transmission ends; or the uplink DRX retransmission timer is started from an initial OFDM symbol of the uplink transmission; or the uplink DRX retransmission timer is started from a first OFDM symbol after a first retransmission of the uplink transmission; or the uplink DRX retransmission timer is started after a corresponding PUSCH data packet is generated according to a PDCCH indication; or the uplink DRX retransmission timer is started after a processing delay when PDCCH data are received. In some embodiments, the processing delay may be an uplink PUSCH processing delay. In other embodiments, the processing delay may be a maximum uplink PUSCH processing delay specified in a system. In some embodiments, the terminal no longer receives uplink scheduling of the HARQ process within the uplink PUSCH processing delay after the network performs the uplink scheduling on the same HARQ process.

In some embodiments, the transmission type of the uplink transmission is the uplink transmission based on PDCCH dynamic scheduling. When the terminal receives the uplink transmission indicated by the PDCCH, if an HARQ retransmission is disabled, or if an HARQ blind retransmission is allowed (that is, the blind retransmission without waiting for the decoding result of the PUSCH), or if a network configures a timing period of the uplink DRX HARQ RTT timer to be a preset value, the uplink DRX HARQ RTT timer is started after data on the PDCCH are received; or the uplink DRX HARQ RTT timer is started from a first OFDM symbol after the uplink transmission ends; or the uplink DRX HARQ RTT timer is started from an initial OFDM symbol of the uplink transmission; or the uplink DRX HARQ RTT timer is started from a first OFDM symbol after a first retransmission of the uplink transmission; or the uplink DRX HARQ RTT timer is started after a corresponding PDCCH data packet is generated according to a PDCCH indication; or the uplink DRX HARQ RTT timer is started after a processing delay when the PDCCH is received. In some embodiments, the processing delay may be an uplink PUSCH processing delay. In other embodiments, the processing delay may be a maximum uplink PUSCH processing delay specified in a system. In some embodiments, the terminal no longer receives uplink scheduling of the HARQ process within the uplink PUSCH processing delay after the network performs the uplink scheduling on the same HARQ process.

In some embodiments, the transmission type of the downlink transmission is the downlink transmission based on PDCCH dynamic scheduling. When the terminal receives the downlink transmission indicated by the PDCCH, if an HARQ retransmission is disabled, or if an HARQ blind retransmission is allowed (that is, the blind retransmission without waiting for a feedback of an ACK/NACK), or if a network configures to disable the downlink DRX HARQ RTT timer, the downlink DRX retransmission timer is started after data on the PDCCH are received; or the downlink DRX retransmission timer is started from a first OFDM symbol after the downlink transmission ends; or the downlink DRX retransmission timer is started from an initial OFDM symbol of the downlink transmission, or the downlink DRX retransmission timer is started from a first OFDM symbol after a first retransmission of the downlink transmission; or the downlink DRX retransmission timer is started after a processing delay when PDCCH data are received. In some embodiments, the processing delay may be a downlink PDSCH processing delay. In other embodiments, the processing delay may be a maximum downlink PDSCH processing delay specified in a system. In some embodiments, the terminal no longer receives the downlink scheduling of the HARQ process within the downlink PDSCH processing delay after the network performs the downlink scheduling on the same HARQ process.

In some embodiments, the transmission type of the downlink transmission is the downlink transmission based on PDCCH dynamic scheduling. When the terminal receives the downlink transmission indicated by the PDCCH, if an HARQ retransmission is disabled, or if an HARQ blind retransmission is allowed (that is, the blind retransmission without waiting for a feedback of an ACK/NACK), or if a network configures a timing period of the downlink DRX HARQ RTT timer to be a preset value, the downlink DRX HARQ RTT timer is started after data on the PDCCH are received; or the downlink DRX HARQ RTT timer is started from a first OFDM symbol after the downlink transmission ends; or the downlink DRX HARQ RTT timer is started from an initial OFDM symbol of the downlink transmission; or the downlink DRX HARQ RTT timer is started from a first OFDM symbol after a first retransmission of the downlink transmission; or the downlink DRX HARQ RTT timer is started after a processing delay when the PDCCH is received. In some embodiments, the processing delay may be a downlink PDSCH processing delay. In other embodiments, the processing delay may be a maximum downlink PDSCH processing delay specified in a system. In some embodiments, the terminal no longer receives the downlink scheduling of the HARQ process within the downlink PDSCH processing delay after the network performs the downlink scheduling on the same HARQ process.

In some embodiments, the transmission type of the downlink transmission is the downlink transmission based on configured downlink assignment. When the terminal receives the downlink transmission adopting configured downlink assignment, if an HARQ retransmission is disabled, or if an HARQ blind retransmission is allowed (that is, the blind retransmission without waiting for a feedback of an ACK/NACK), or if a network configuring to disable the downlink DRX HARQ RTT timer, the downlink DRX retransmission timer is started from a first OFDM symbol after the downlink transmission ends; or the downlink DRX retransmission timer is started from an initial OFDM symbol of the downlink transmission, or the downlink DRX retransmission timer is started from a first OFDM symbol after a first retransmission of the downlink transmission; or the downlink DRX retransmission timer is started after a processing delay when the PDSCH is received. In some embodiments, the processing delay may be a downlink PDSCH processing delay. In other embodiments, the processing delay may be a maximum downlink PDSCH processing delay specified in a system. In some embodiments, the terminal no longer receives the downlink scheduling of the HARQ process within the downlink PDSCH processing delay after the network performs the downlink scheduling on the same HARQ process.

In some embodiments, the transmission type of the downlink transmission is the downlink transmission based on configured downlink assignment. When the terminal receives the downlink transmission adopting configured downlink assignment, if an HARQ retransmission is disabled, or if an HARQ blind retransmission is allowed (that is, the blind retransmission without waiting for a feedback of an ACK/NACK), or if a network configures a timing period of the downlink DRX HARQ RTT timer to be a preset value, the downlink DRX HARQ RTT timer is started from a first OFDM symbol after the downlink transmission ends; or the downlink DRX HARQ RTT timer is started from an initial OFDM symbol of the downlink transmission; or the downlink DRX HARQ RTT timer is started from a first OFDM symbol after a first retransmission of the downlink transmission; or the downlink DRX HARQ RTT timer is started after a processing delay when the PDSCH is received. In some embodiments, the processing delay may be a downlink PDSCH processing delay. In other embodiments, the processing delay may be a maximum downlink PDSCH processing delay specified in a system. In some embodiments, the terminal no longer receives the downlink scheduling of the HARQ process within the downlink PDSCH processing delay after the network performs the downlink scheduling on the same HARQ process.

In embodiments of the disclosure, the DRX timer is started according to the transmission type of the uplink transmission and/or the downlink transmission. The operation of starting the DRX timer may be determined according to the transmission type of the uplink transmission and/or the downlink transmission. Compared with an operation of starting the DRX timer in a fixed way, the operation of starting the DRX timer may be adapted to the transmission type of the uplink transmission and/or the downlink transmission, so that setting of the DRX timer may be adapted to the transmission type, timing of the DRX timer is more accurate, and the DRX is more reliable.

It should be noted that, those skilled in the art may understand that, the method provided in embodiments of the disclosure may be executed independently or may be executed in combination with some methods in embodiments of the disclosure or some methods in the related art.

As illustrated in FIG 5, a method for starting a DRX timer is provided in some embodiments and performed by a terminal. The method includes the following steps.

At step 51, it is determined that the transmission type of the uplink transmission is the uplink transmission based on CG.

At step 52, a timing period of an uplink DRX HARQ RTT timer is increased by a predetermined duration.

In some embodiments, in response to the transmission type of the uplink transmission being the uplink transmission based on CG, the timing period of the uplink DRX HARQ RTT timer is increased by the predetermined duration.

The predetermined duration may be an offset. The value of the predetermined duration may be a round-trip time (RTT) between the terminal and the base station. Increasing by the predetermined duration may be increasing by the predetermined duration on the basis of an initial configuration duration of the timing period.

It should be noted that, those skilled in the art may understand that, the method provided in embodiments of the disclosure may be executed independently or may be executed in combination with some methods in embodiments of the disclosure or some methods in the related art.

As illustrated in FIG 6, a method for starting a DRX timer is provided in some embodiments and performed by a terminal. The method includes the following step.

At step 61, in response to an HARQ retransmission being disabled, the timing period of the uplink

DRX HARQ RTT timer is increased by the predetermined duration; or in response to an HARQ blind retransmission being allowed, the timing period of the uplink DRX HARQ RTT timer is increased by the predetermined duration; or in response to a network configuring the timing period of the uplink DRX HARQ RTT timer to be increased by the predetermined duration, the timing period of the uplink DRX HARQ RTT timer is increased by the predetermined duration.

Allowing the blind retransmission, may be an operation of allowing a transmitter to automatically perform an operation of retransmitting information to a receiver in response to not receiving an HARQ feedback of the receiver. In some embodiments, the base station may transmit configuration information of the blind retransmission to the terminal. The configuration information includes but not limited to a time interval of the blind retransmission, a number of times of the blind retransmission and a time window of the blind retransmission. The terminal may perform the blind retransmission communication with the base station based on the configuration information.

It should be noted that, those skilled in the art may understand that, the method provided in embodiments of the disclosure may be executed independently or may be executed in combination with some methods in embodiments of the disclosure or some methods in the related art.

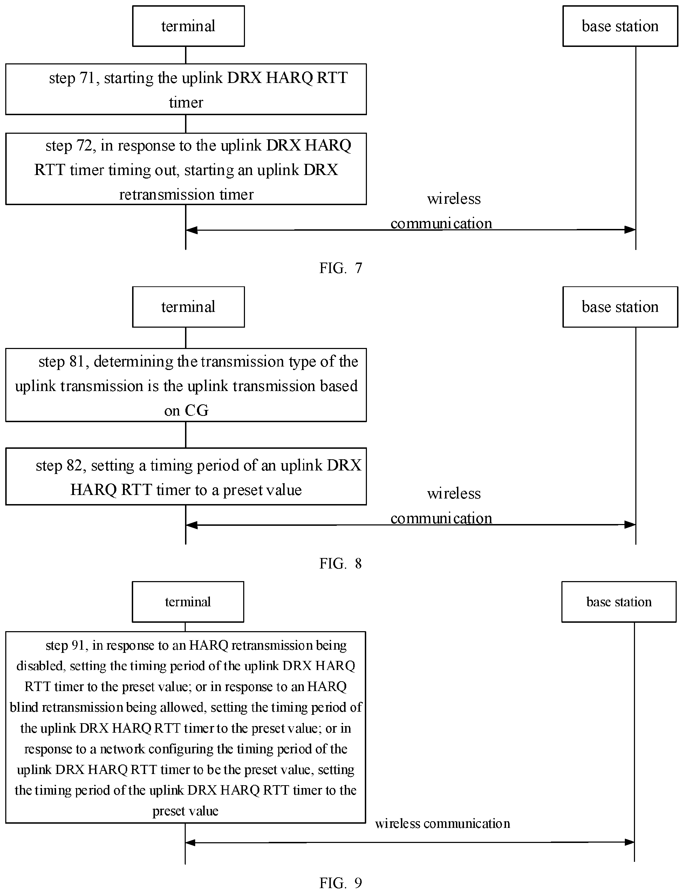

As illustrated in FIG 7, a method for starting a DRX timer is provided in some embodiments and performed by a terminal. The method includes the following steps.

At step 71, the uplink DRX HARQ RTT timer is started.

At step 72, in response to the uplink DRX HARQ RTT timer timing out, an uplink DRX retransmission timer is started.

In some embodiments, the transmission type of the uplink transmission is the uplink transmission based on CG. When the terminal performs the uplink transmission based on CG, the timing period of the uplink DRX HARQ RTT timer is increased by the predetermined duration (the predetermined duration may be an offset). In response to the uplink DRX HARQ RTT timer timing out, an uplink DRX retransmission timer is started. The value of the predetermined duration may be a round-trip time (RTT) between the terminal and the base station.

In some embodiments, the transmission type of the uplink transmission is the uplink transmission based on CG. When the terminal performs the uplink transmission based on CG, in response to an HARQ retransmission being disabled, or in response to an HARQ blind retransmission being allowed (that is, the HARQ may perform a blind retransmission without waiting for a decoding result of a PUSCH), or in response to a network configuring the timing period of the uplink DRX HARQ RTT timer to be increased by the predetermined duration, the timing period of the uplink DRX HARQ RTT timer is increased by the predetermined duration. In response to the uplink DRX HARQ RTT timer timing out, an uplink DRX retransmission timer is started. The value of the predetermined duration may be a round-trip time (RTT) between the terminal and the base station.

It should be noted that, those skilled in the art may understand that, the method provided in embodiments of the disclosure may be executed independently or may be executed in combination with some methods in embodiments of the disclosure or some methods in the related art.

As illustrated in FIG 8, a method for starting a DRX timer is provided in some embodiments and performed by a terminal. The method includes the following steps.

At step 81, it is determined that the transmission type of the uplink transmission is the uplink transmission based on CG.

At step 82, a timing period of an uplink DRX HARQ RTT timer is set to a preset value.

In some embodiments, in response to the transmission type of the uplink transmission being the uplink transmission based on CG, the timing period of the uplink DRX HARQ RTT timer is set to the preset value.

The preset value may be 0.

It should be noted that, those skilled in the art may understand that, the method provided in embodiments of the disclosure may be executed independently or may be executed in combination with some methods in embodiments of the disclosure or some methods in the related art.

As illustrated in FIG 9, a method for starting a DRX timer is provided in some embodiments and performed by a terminal. The method includes the following step.

At step 91, in response to an HARQ retransmission being disabled, the timing period of the uplink DRX HARQ RTT timer is set to the preset value; or in response to an HARQ blind retransmission being allowed, the timing period of the uplink DRX HARQ RTT timer is set to the preset value; or in response to a network configuring the timing period of the uplink DRX HARQ RTT timer to be the preset value, the timing period of the uplink DRX HARQ RTT timer is set to the preset value.

Allowing the blind retransmission, may be an operation of allowing a transmitter to automatically perform an operation of retransmitting information to a receiver in response to not receiving an HARQ feedback of the receiver. In some embodiments, the base station may transmit configuration information of the blind retransmission to the terminal. The configuration information includes but not limited to a time interval of the blind retransmission, a number of times of the blind retransmission and a time window of the blind retransmission. The terminal may perform the blind retransmission communication with the base station based on the configuration information.

It should be noted that, those skilled in the art may understand that, the method provided in embodiments of the disclosure may be executed independently or may be executed in combination with some methods in embodiments of the disclosure or some methods in the related art.

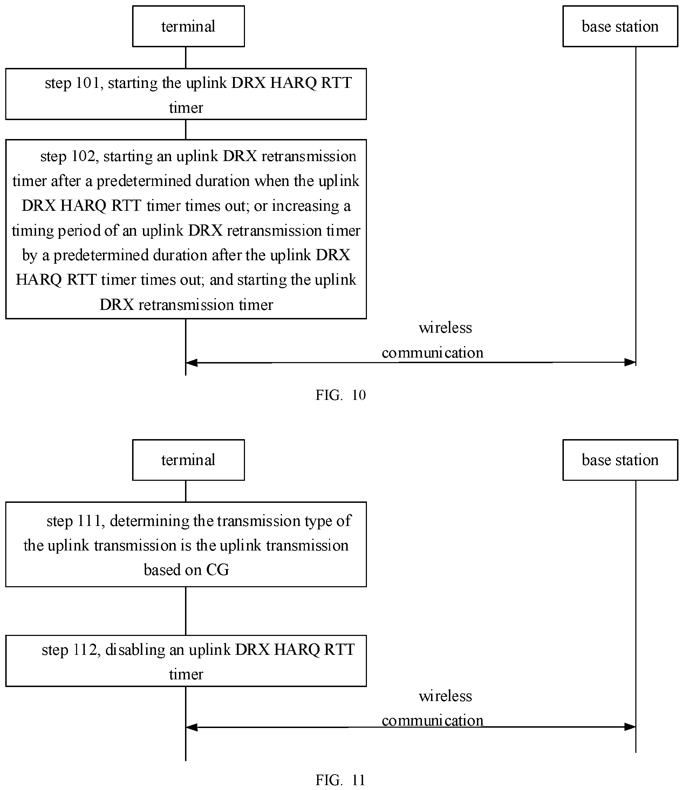

As illustrated in FIG 10, a method for starting a DRX timer is provided in some embodiments and performed by a terminal. The method includes the following steps.

At step 101, the uplink DRX HARQ RTT timer is started.

At step 102, an uplink DRX retransmission timer is started after a predetermined duration when the uplink DRX HARQ RTT timer times out; or a timing period of an uplink DRX retransmission timer is increased by a predetermined duration when the uplink DRX HARQ RTT timer times out; and the uplink DRX retransmission timer is started.

In some embodiments, the transmission type of the uplink transmission is the uplink transmission based on CG. When the terminal performs the uplink transmission based on CG, in response to an HARQ retransmission being disabled, or in response to an HARQ blind retransmission being allowed (that is, the HARQ may perform the blind retransmission without waiting for a decoding result of a PUSCH), or in response to a network configuring the timing period of the uplink DRX HARQ RTT timer to be a preset value (for example, the preset value is 0), the timing period of the uplink DRX HARQ RTT timer is set to the preset value. An uplink DRX retransmission timer is started after a predetermined duration when the uplink DRX HARQ RTT timer times out. The value of the predetermined duration may be a round-trip time (RTT) between the terminal and the base station.

In some embodiments, the transmission type of the uplink transmission is the uplink transmission based on CG. When the terminal performs the uplink transmission based on CG, in response to an HARQ retransmission being disabled, or in response to an HARQ blind retransmission being allowed (that is, the HARQ may perform the blind retransmission without waiting for a decoding result of a PUSCH), or in response to a network configuring the timing period of the uplink DRX HARQ RTT timer to be a preset value (for example, the preset value is 0), the timing period of the uplink DRX HARQ RTT timer is set to the preset value. A timing period of an uplink DRX retransmission timer is increased by a predetermined duration when the uplink DRX HARQ RTT timer times out; and the uplink DRX retransmission timer is started. The value of the predetermined duration may be a round-trip time (RTT) between the terminal and the base station.

It should be noted that, those skilled in the art may understand that, the method provided in embodiments of the disclosure may be executed independently or may be executed in combination with some methods in embodiments of the disclosure or some methods in the related art.

As illustrated in FIG 11, a method for starting a DRX timer is provided in some embodiments and performed by a terminal. The method includes the following steps.

At step 111, it is determined that the transmission type of the uplink transmission is the uplink transmission based on CG.

At step 112, an uplink DRX HARQ RTT timer is disabled.

In some embodiments, in response to determining the transmission type of the uplink transmission is the uplink transmission based on CG, the timing period of the uplink DRX HARQ RTT timer is disabled.

In some embodiments, if the HARQ retransmission used for the transmission is disabled, the terminal disables the uplink DRX HARQ RTT timer.

It should be noted that, in the NTN, the terminal and the base station communicate with a device located in the air such as a satellite. However, since the satellite is usually located at a higher position, there may be a large delay in communication through the satellite, which may affect a process where the receiver transmits the HARQ feedback to the transmitter. Therefore, in this case, the receiver may be disabled to transmit the HARQ feedback to the transmitter.

It should be noted that, those skilled in the art may understand that, the method provided in embodiments of the disclosure may be executed independently or may be executed in combination with some methods in embodiments of the disclosure or some methods in the related art.

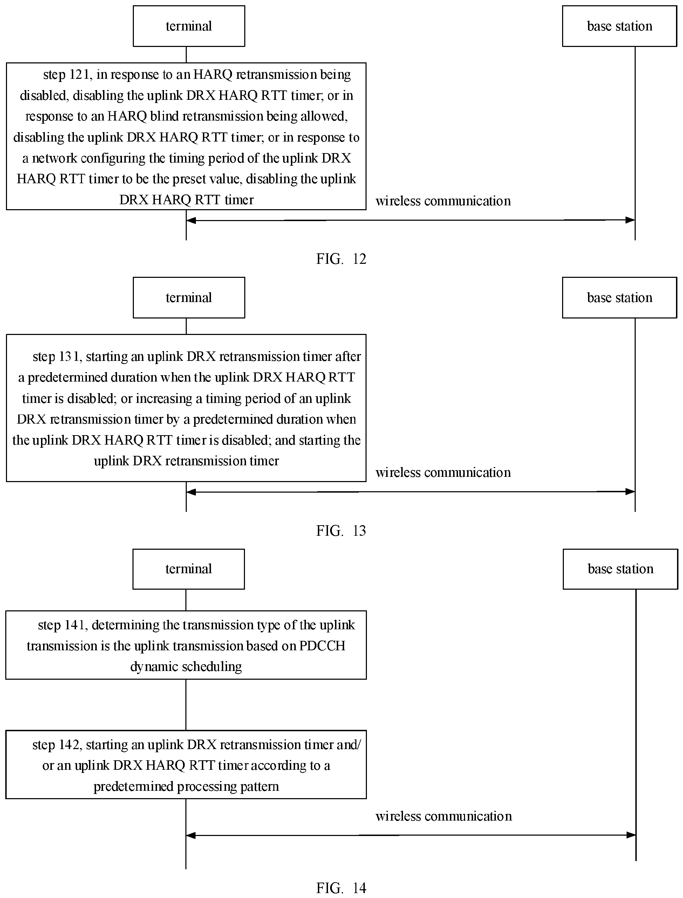

As illustrated in FIG 12, a method for starting a DRX timer is provided in some embodiments and performed by a terminal. The method includes the following step.

At step 121, in response to an HARQ retransmission being disabled, the uplink DRX HARQ RTT timer is disabled; or in response to an HARQ blind retransmission being allowed, the uplink DRX HARQ RTT timer is disabled; or in response to a network configuring the timing period of the uplink DRX HARQ RTT timer to be the preset value, the uplink DRX HARQ RTT timer is disabled.

Allowing the blind retransmission, may be an operation of allowing a transmitter to automatically perform an operation of retransmitting information to a receiver in response to not receiving an HARQ feedback of the receiver. In some embodiments, the base station may transmit configuration information of the blind retransmission to the terminal. The configuration information includes but not limited to a time interval of the blind retransmission, a number of times of the blind retransmission and a time window of the blind retransmission. The terminal may perform the blind retransmission communication with the base station based on the configuration information.

It should be noted that, those skilled in the art may understand that, the method provided in embodiments of the disclosure may be executed independently or may be executed in combination with some methods in embodiments of the disclosure or some methods in the related art.

As illustrated in FIG 13, a method for starting a DRX timer is provided in some embodiments and performed by a terminal. The method includes the following step.

At step 131, an uplink DRX retransmission timer is started after a predetermined duration when the uplink DRX HARQ RTT timer is disabled; or a timing period of an uplink DRX retransmission timer is increased by a predetermined duration when the uplink DRX HARQ RTT timer is disabled; and the uplink DRX retransmission timer is started.

In some embodiments, the transmission type of the uplink transmission is the uplink transmission based on CG. When the terminal performs the uplink transmission based on CG, in response to an HARQ retransmission being disabled, or in response to an HARQ blind retransmission being allowed, or in response to a network configuring the timing period of the uplink DRX HARQ RTT timer to be a preset value, the uplink DRX HARQ RTT timer is disabled. An uplink DRX retransmission timer is started after a predetermined duration when the uplink DRX HARQ RTT timer is disabled. The value of the predetermined duration may be a round-trip time (RTT) between the terminal and the base station.

In some embodiments, the transmission type of the uplink transmission is the uplink transmission based on CG. When the terminal performs the uplink transmission based on CG, in response to an HARQ retransmission being disabled, or in response to an HARQ blind retransmission being allowed, or in response to a network configuring the timing period of the uplink DRX HARQ RTT timer to be a preset value, the uplink DRX HARQ RTT timer is disabled. A timing period of the uplink DRX retransmission timer is increased by a predetermined duration after the uplink DRX HARQ RTT timer is disabled; and the uplink DRX retransmission timer is started. The value of the predetermined duration may be a round-trip time (RTT) between the terminal and the base station.

It should be noted that, those skilled in the art may understand that, the method provided in embodiments of the disclosure may be executed independently or may be executed in combination with some methods in embodiments of the disclosure or some methods in the related art.

As illustrated in FIG 14, a method for starting a DRX timer is provided in some embodiments and performed by a terminal. The method includes the following steps.

At step 141, it is determined that the transmission type of the uplink transmission is the uplink transmission based on PDCCH dynamic scheduling.

At step 142, an uplink DRX retransmission timer and/or an uplink DRX HARQ RTT timer is started according to a predetermined processing pattern.

In some embodiments, in response to determining the transmission type of the uplink transmission is the uplink transmission based on PDCCH dynamic scheduling, an uplink DRX retransmission timer and/or an uplink DRX hybrid HARQ RTT timer is started according to a predetermined processing pattern.

In some embodiments, in response to an HARQ retransmission being disabled, or in response to an HARQ blind retransmission being allowed, or in response to a network configuring to disable the uplink DRX HARQ RTT timer, the uplink DRX retransmission timer is started according to the predetermined processing pattern. In some embodiments, the predetermined processing pattern includes: a pattern of starting the uplink DRX retransmission timer after receiving data on the PDCCH; or a pattern of starting the uplink DRX retransmission timer from a first OFDM symbol after the uplink transmission ends; or a pattern of starting the uplink DRX retransmission timer from an initial OFDM symbol of the uplink transmission; or a pattern of starting the uplink DRX retransmission timer from a first OFDM symbol after a first retransmission of the uplink transmission; or a pattern of starting the uplink DRX retransmission timer after generating a corresponding PUSCH data packet according to a PDCCH indication; or a pattern of starting the uplink DRX retransmission timer after a processing delay when PDCCH data are received. In some embodiments, the processing delay may be an uplink PUSCH processing delay of an. In other embodiments, the processing delay may be a maximum uplink PUSCH processing delay specified in the system. In some embodiments, the terminal no longer receives uplink scheduling of the HARQ process within the uplink PUSCH processing delay after the network performs the uplink scheduling on the same HARQ process.

In some embodiments, in response to an HARQ retransmission being disabled, or in response to an HARQ blind retransmission being allowed, or in response to a network configuring the timing period of the uplink DRX HARQ RTT timer to be the preset value, the uplink DRX HARQ RTT timer is started according to the predetermined processing pattern. The predetermined processing pattern includes: a pattern of starting the uplink DRX HARQ RTT timer after receiving data on the PDCCH; or a pattern of starting the uplink DRX HARQ RTT timer from a first OFDM symbol after the uplink transmission ends; or a pattern of starting the uplink DRX HARQ RTT timer from an initial OFDM symbol of the uplink transmission; or a pattern of starting the uplink DRX HARQ RTT timer from a first OFDM symbol after a first retransmission of the uplink transmission; or a pattern of starting the uplink DRX HARQ RTT timer after generating a corresponding PUSCH data packet according to a PDCCH indication; or a pattern of starting the uplink DRX HARQ RTT timer after a processing delay when the PDCCH is received. In some embodiments, the processing delay may be an uplink PUSCH processing delay of an. In other embodiments, the processing delay may be a maximum uplink PUSCH processing delay specified in the system. In some embodiments, the terminal no longer receives uplink scheduling of the HARQ process within the uplink PUSCH processing delay after the network performs the uplink scheduling on the same HARQ process.

It should be noted that, those skilled in the art may understand that, the method provided in embodiments of the disclosure may be executed independently or may be executed in combination with some methods in embodiments of the disclosure or some methods in the related art.

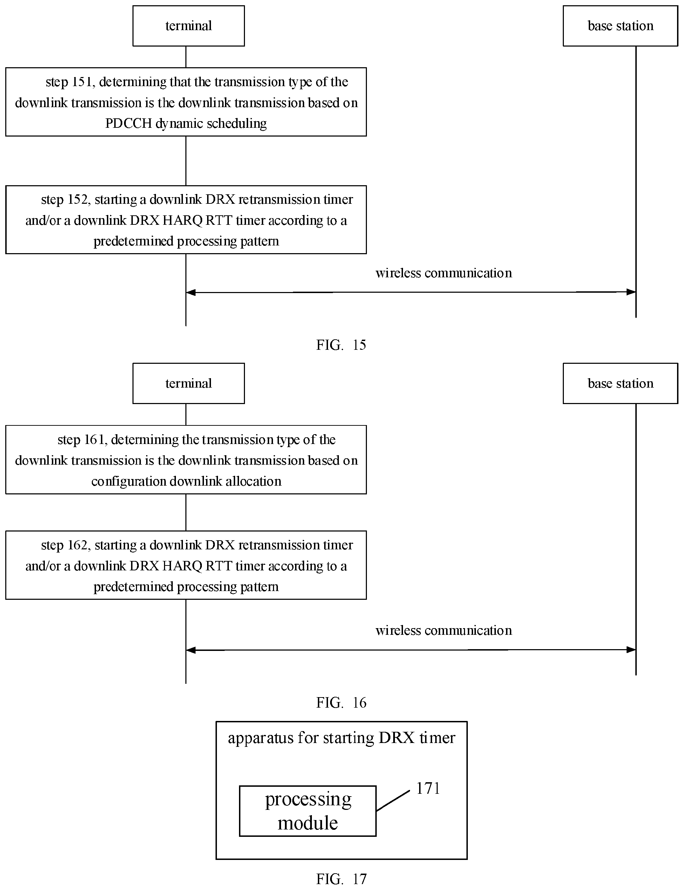

As illustrated in FIG 15, a method for starting a DRX timer is provided in some embodiments and performed by a terminal. The method includes the following steps.

At step 151, it is determined that the transmission type of the downlink transmission is the downlink transmission based on PDCCH dynamic scheduling.

At step 152, a downlink DRX retransmission timer and/or a downlink DRX HARQ RTT timer is started according to a predetermined processing pattern.

In some embodiments, in response to determining the transmission type of the downlink transmission is the downlink transmission based on PDCCH dynamic scheduling, a downlink DRX retransmission timer and/or a downlink DRX HARQ RTT timer is started according to a predetermined processing pattern.

In some embodiments, in response to an HARQ retransmission being disabled, or in response to an HARQ blind retransmission being allowed, or in response to a network configuring to disable the downlink DRX HARQ RTT timer, the uplink DRX retransmission timer is started according to the predetermined processing pattern. The predetermined processing pattern includes: a pattern of starting the downlink DRX retransmission timer after receiving data on the PDCCH; or a pattern of starting the downlink DRX retransmission timer from a first OFDM symbol after the downlink transmission ends; or a pattern of starting the downlink DRX retransmission timer from an initial OFDM symbol of the downlink transmission; or a pattern of starting the downlink DRX retransmission timer from a first OFDM symbol after a first retransmission of the downlink transmission; or a pattern of starting the downlink DRX retransmission timer after a processing delay when the PDCCH is received. In some embodiments, the processing delay may be a downlink PDSCH processing delay. In other embodiments, the processing delay may be a maximum downlink PDSCH processing delay specified in the system. In some embodiments, the terminal no longer receives the downlink scheduling of the HARQ process within the downlink PDSCH processing delay after the network performs the downlink scheduling on the same HARQ process.

In some embodiments, in response to an HARQ retransmission being disabled, or in response to an HARQ blind retransmission being allowed, or in response to a network configuring the timing period of the downlink DRX HARQ RTT timer to be the preset value, the downlink DRX HARQ RTT timer is started according to the predetermined processing pattern. The predetermined processing pattern includes: a pattern of starting the downlink DRX HARQ RTT timer after receiving data on the PDCCH; or a pattern of starting the downlink DRX HARQ RTT timer from a first OFDM symbol after the downlink transmission ends; or a pattern of starting the downlink DRX HARQ RTT timer from an initial OFDM symbol of the downlink transmission; or a pattern of starting the downlink DRX HARQ RTT timer from a first OFDM symbol after a first retransmission of the downlink transmission; or a pattern of starting the downlink DRX HARQ RTT timer after a processing delay when the PDCCH is received. In some embodiments, the processing delay may be a downlink PDSCH processing delay. In other embodiments, the processing delay may be a maximum downlink PDSCH processing delay specified in the system. In some embodiments, the terminal no longer receives the downlink scheduling of the HARQ process within the downlink PDSCH processing delay after the network performs the downlink scheduling on the same HARQ process.

It should be noted that, those skilled in the art may understand that, the method provided in embodiments of the disclosure may be executed independently or may be executed in combination with some methods in embodiments of the disclosure or some methods in the related art.

As illustrated in FIG 16, a method for starting a DRX timer is provided in some embodiments and performed by a terminal. The method includes the following steps.

At step 161, it is determined that the transmission type of the downlink transmission is the downlink transmission based on configured downlink assignment.

At step 162, a downlink DRX retransmission timer and/or a downlink DRX HARQ RTT timer is started according to a predetermined processing pattern.

In some embodiments, the transmission type of the uplink transmission is the downlink transmission based on configured downlink assignment. When the terminal receives the downlink transmission adopting configured downlink assignment, in response to an HARQ retransmission being disabled, or in response to an HARQ blind retransmission being allowed, or in response to a network configuring to disable the downlink DRX HARQ RTT timer, the downlink DRX retransmission timer is started from a first OFDM symbol after the downlink transmission ends; or the downlink DRX retransmission timer is started from an initial OFDM symbol of the downlink transmission, or the downlink DRX retransmission timer is started from a first OFDM symbol after a first retransmission of the downlink transmission; or the downlink DRX retransmission timer is started after a processing delay when the PDSCH is received. In some embodiments, the processing delay may be a downlink PDSCH processing delay. In other embodiments, the processing delay may be a maximum downlink PDSCH processing delay specified in the system. In some embodiments, the terminal no longer receives the downlink scheduling of the HARQ process within the downlink PDSCH processing delay after the network performs the downlink scheduling on the same HARQ process.

In some embodiments, the transmission type of the uplink transmission is the downlink transmission based on configured downlink assignment. When the terminal receives the downlink transmission adopting configured downlink assignment, in response to an HARQ retransmission being disabled, or in response to an HARQ blind retransmission being allowed, or in response to a network configuring a timing period of the downlink DRX HARQ RTT timer to be a preset value, the downlink DRX HARQ RTT timer is started from a first OFDM symbol after the downlink transmission ends; or the downlink DRX HARQ RTT timer is started from an initial OFDM symbol of the downlink transmission; or the downlink DRX HARQ RTT timer is started from a first OFDM symbol after a first retransmission of the downlink transmission; or the downlink DRX HARQ RTT timer is started after a processing delay when the PDSCH is received. In some embodiments, the processing delay may be a downlink PDSCH processing delay. In other embodiments, the processing delay may be a maximum downlink PDSCH processing delay specified in the system. In some embodiments, the terminal no longer receives the downlink scheduling of the HARQ process within the downlink PDSCH processing delay after the network performs the downlink scheduling on the same HARQ process.

It should be noted that, those skilled in the art may understand that, the method provided in embodiments of the disclosure may be executed independently or may be executed in combination with some methods in embodiments of the disclosure or some methods in the related art.

As illustrated in FIG 17, an apparatus for starting a DRX timer is provided in some embodiments. The apparatus includes a processing module 171.

The processing module 171 is configured to start the DRX timer according to a transmission type of an uplink transmission and/or a downlink transmission.

It should be noted that, those skilled in the art may understand that, the method provided in embodiments of the disclosure may be executed independently or may be executed in combination with some methods in embodiments of the disclosure or some methods in the related art.

A communication device is provided in embodiments of the disclosure and includes: a processor; and a memory for storing instructions executable by the processor; in which the processor is configured to perform the method described in the above any embodiment when running the executable instructions.

The processor may include various types of storage media. The storage medium is a non-transitory computer storage medium and may continue memorizing and storing information thereon when the communication device is powered off.

The processor is connected to the memory via a bus and may be configured to read an executable program stored on the memory.

A computer storage medium stored with a computer executable program is further provided in embodiments of the disclosure. The executable program realizes the method as described in the above any embodiment when executed by a processor.

With respect to the apparatuses or devices in the above embodiments, the specific manners for performing operations for individual modules therein have been described in detail in the embodiments regarding the methods, which will not be elaborated herein.

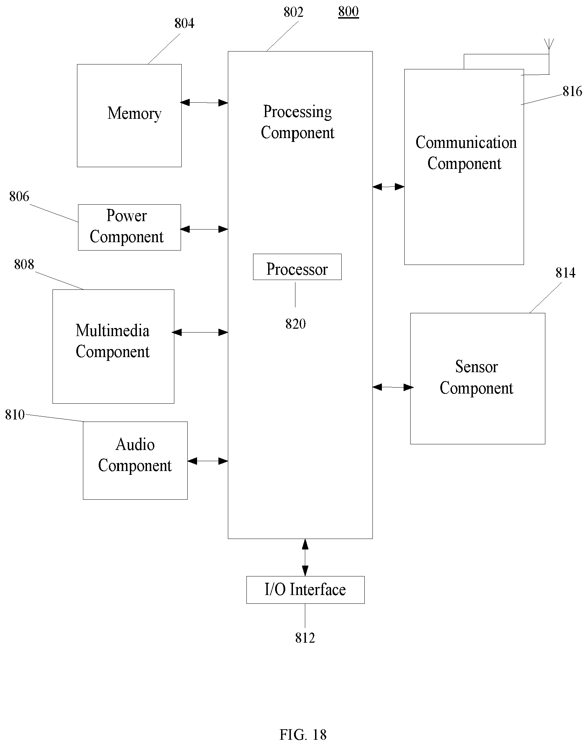

As illustrated in FIG. 18, a structure of a terminal is provided according to some embodiments of the disclosure.

As illustrated in FIG. 18, a terminal 800 is provided in some embodiments. The terminal may be a mobile phone, a computer, a digital broadcast terminal, a messaging device, a gaming console, a tablet, a medical device, exercise equipment, a personal digital assistant, and the like.

As illustrated in FIG. 18, the terminal 800 may include one or more components: a processing component 802, a memory 804, a power component 806, a multimedia component 808, an audio component 810, an input/output (I/O) interface 812, a sensor component 814, and a communication component 816.

The processing component 802 typically controls overall operations of the terminal 800, such as the operations associated with display, telephone calls, data communications, camera operations, and recording operations. The processing component 802 may include one or more processors 820 to execute instructions to perform all or part of the steps in the above described methods. In addition, the processing component 802 may include one or more modules which facilitate the interaction between the processing component 802 and other components. For instance, the processing component 802 may include a multimedia module to facilitate the interaction between the multimedia component 808 and the processing component 802.

The memory 804 is configured to store various types of data to support the operation of the terminal 800. Examples of such data include instructions for any applications or methods operated on the terminal 800, contact data, phonebook data, messages, pictures, video, etc. The memory 804 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 806 provides power to various components of the terminal 800. The power component 806 may include a power management system, one or more power sources, and any other components associated with the generation, management, and distribution of power in the terminal 800.

The multimedia component 808 includes a screen providing an output interface between the terminal 800 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 808 includes a front camera and/or a rear camera. The front camera and the rear camera may receive an external multimedia datum while the terminal 800 is in an operation mode, such as a photographing mode or a video mode. Each of the front camera and the rear camera may be a fixed optical lens system or have focus and optical zoom capability.

The audio component 810 is configured to output and/or input audio signals. For example, the audio component 810 includes a microphone ("MIC") configured to receive an external audio signal when the terminal 800 is in an operation mode, such as a call mode, a recording mode, and a voice recognition mode. The received audio signal may be further stored in the memory 804 or transmitted via the communication component 816. In some embodiments, the audio component 810 further includes a speaker to output audio signals.

The I/O interface 812 provides an interface between the processing component 802 and peripheral interface modules, such as a keyboard, a click wheel, buttons, and the like. The buttons may include, but are not limited to, a home button, a volume button, a starting button, and a locking button.

The sensor component 814 includes one or more sensors to provide status assessments of various aspects of the terminal 800. For instance, the sensor component 814 may detect an open/closed status of the terminal 800, relative positioning of components, e.g., the display and the keypad, of the terminal 800, a change in position of the terminal 800 or a component of the terminal 800, a presence or absence of user contact with the terminal 800, an orientation or an acceleration/deceleration of the terminal 800, and a change in temperature of the terminal 800. The sensor component 814 may include a proximity sensor configured to detect the presence of nearby objects without any physical contact. The sensor component 814 may also include a light sensor, such as a CMOS or CCD image sensor, for use in imaging applications. In some embodiments, the sensor component 814 may also include an accelerometer sensor, a gyroscope sensor, a magnetic sensor, a pressure sensor, or a temperature sensor.

The communication component 816 is configured to facilitate communication, wired orwirelessly, between the terminal 800 and other devices. The terminal 800 can access a wireless network based on a communication standard, such as Wi-Fi, 2G, or 3G, or a combination thereof. In some embodiments, the communication component 816 receives a broadcast signal or broadcast associated information from an external broadcast management system via a broadcast channel. In some embodiments, the communication component 816 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In some embodiments, the terminal 800 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In some embodiments, there is also provided a non-transitory computer-readable storage medium including instructions, such as included in the memory 804, executable by the processor 820 in the terminal 800, for performing the above-described methods. For example, the non-transitory computer-readable storage medium may be a ROM, a RAM, a CD-ROM, a magnetic tape, a floppy disc, an optical data storage device, and the like.

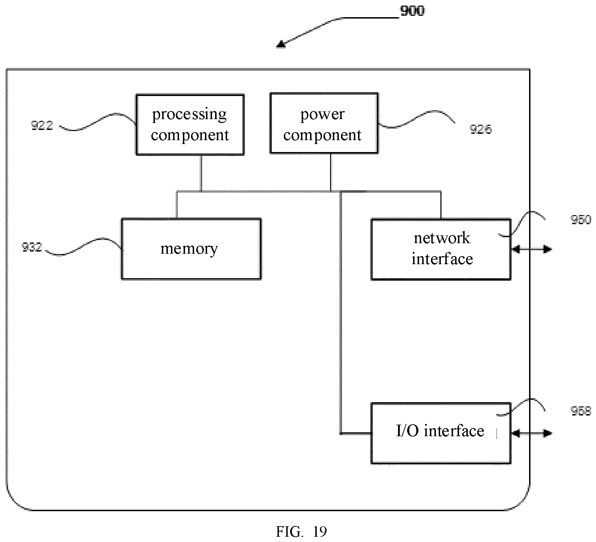

FIG. 19 is a block diagram illustrating a base station according to some embodiments of the disclosure. For example, a base station 900 may be provided as a network side device. As illustrated in FIG. 19, the base station 900 includes a processing component 922, which further includes one or more processors, and memory resources represented by a memory 932, which are configured to store instructions executable by the processing component 922, for example, an application. The application stored in the memory 932 may include one or more modules each of which corresponds to a set of instructions. In addition, the processing component 922 is configured to execute instructions, to perform any one method applied to the base station as described in the above method.

The base station 900 may further include a power component 926 configured to execute power management of the base station 900, a wired or wireless network interface 950 configured to connect the base station 900 to a network, and an I/O interface 958. The base station 900 may operate an operating system stored in the memory 932, for example, Windows Server^{™}, Mac OS X^{™}, Unix^{™}, Linux^{™}, FreeBSD^{™}, or the like.

Other embodiments of the disclosure will be apparent to those skilled in the art from consideration of the specification and practice of the disclosure disclosed here. This application is intended to cover any variations, uses, or adaptations of the disclosure following the general principles thereof and including such departures from the disclosure as come within known or customary practice in the art. It is intended that the specification and examples be considered as exemplary only, with a true scope and spirit of the disclosure being indicated by the following claims.

It will be appreciated that the disclosure is not limited to the exact construction that has been described above and illustrated in the accompanying drawings, and that various modifications and changes can be made without departing from the scope thereof. It is intended that the scope of the disclosure only be limited by the appended claims.

## Claims

1. A method for starting a discontinuous reception (DRX) timer, performed by a terminal, comprising:
starting the DRX timer according to a transmission type of an uplink transmission and/or a downlink transmission.

2. The method according to claim 1, wherein the transmission type comprises one of:
an uplink transmission based on configured grant (CG);
an uplink transmission based on physical downlink control channel (PDCCH) dynamic scheduling;
a downlink transmission based on PDCCH dynamic scheduling; or
a downlink transmission based on configured downlink assignment.

3. The method according to claim 1, wherein the DRX timer comprises at least one of:
a DRX hybrid automatic repeat request (HARQ) round-trip-time (RTT) timer; or
a DRX retransmission timer.

4. The method according to claim 2, further comprising:
determining the transmission type of the uplink transmission is the uplink transmission based on CG; and
increasing a timing period of an uplink DRX hybrid automatic repeat request (HARQ) round-trip-time (RTT) timer by a predetermined duration.

5. The method according to claim 4, wherein increasing the timing period of the uplink DRX HARQ RTT timer by the predetermined duration comprises:
in response to an HARQ retransmission being disabled, increasing the timing period of the uplink DRX HARQ RTT timer by the predetermined duration; or
in response to an HARQ blind retransmission being allowed, increasing the timing period of the uplink DRX HARQ RTT timer by the predetermined duration; or
in response to a network configuring the timing period of the uplink DRX HARQ RTT timer to be increased by the predetermined duration, increasing the timing period of the uplink DRX HARQ RTT timer by the predetermined duration.

6. The method according to claim 4, wherein starting the DRX timer comprises:
starting the uplink DRX HARQ RTT timer; and
in response to the uplink DRX HARQ RTT timer timing out, starting an uplink DRX retransmission timer.

7. The method according to claim 2, further comprising:
determining the transmission type of the uplink transmission is the uplink transmission based on CG; and
setting a timing period of an uplink DRX hybrid automatic repeat request (HARQ) round-trip-time (RTT) timer to a preset value.

8. The method according to claim 7, wherein setting the timing period of the uplink DRX HARQ RTT timer to the preset value comprises:
in response to an HARQ retransmission being disabled, setting the timing period of the uplink DRX HARQ RTT timer to the preset value; or
in response to an HARQ blind retransmission being allowed, setting the timing period of the uplink DRX HARQ RTT timer to the preset value; or
in response to a network configuring the timing period of the uplink DRX HARQ RTT timer to be the preset value, setting the timing period of the uplink DRX HARQ RTT timer to the preset value.

9. The method according to claim 7, wherein starting the DRX timer comprises:
starting the uplink DRX HARQ RTT timer;
starting an uplink DRX retransmission timer after a predetermined duration when the uplink DRX HARQ RTT timer times out; or
increasing a timing period of an uplink DRX retransmission timer by a predetermined duration when the uplink DRX HARQ RTT timer times out; and starting the uplink DRX retransmission timer.

10. The method according to claim 2, further comprising:
determining the transmission type of the uplink transmission is the uplink transmission based on CG; and
disabling an uplink DRX hybrid automatic repeat request (HARQ) round-trip-time (RTT) timer.

11. The method according to claim 10, wherein disabling the uplink DRX HARQ RTT timer comprises:
in response to an HARQ retransmission being disabled, disabling the uplink DRX HARQ RTT timer; or
in response to an HARQ blind retransmission being allowed, disabling the uplink DRX HARQ RTT timer; or
in response to a network configuring a timing period of the uplink DRX HARQ RTT timer to be a preset value, disabling the uplink DRX HARQ RTT timer.

12. The method according to claim 10, wherein starting the DRX timer comprises:
starting an uplink DRX retransmission timer after a predetermined duration when the uplink DRX HARQ RTT timer is disabled; or
increasing a timing period of an uplink DRX retransmission timer by a predetermined duration when the uplink DRX HARQ RTT timer is disabled; and starting the uplink DRX retransmission timer.

13. The method according to claim 2, further comprising:
determining the transmission type of the uplink transmission is the uplink transmission based on PDCCH dynamic scheduling; and
starting the DRX timer comprises:
starting an uplink DRX retransmission timer and/or an uplink DRX hybrid automatic repeat request (HARQ) round-trip-time (RTT) timer according to a predetermined processing pattern.

14. The method according to claim 13, wherein starting the uplink DRX retransmission timer according to the predetermined processing pattern comprises:
in response to an HARQ retransmission being disabled, starting the uplink DRX retransmission timer according to the predetermined processing pattern; or
in response to an HARQ blind retransmission being allowed, starting the uplink DRX retransmission timer according to the predetermined processing pattern; or
in response to a network configuring to disable the uplink DRX HARQ RTT timer, starting the uplink DRX retransmission timer according to the predetermined processing pattern.

15. The method according to claim 13, wherein the predetermined processing pattern comprises:
a pattern of starting the uplink DRX retransmission timer after receiving data on the PDCCH; or
a pattern of starting the uplink DRX retransmission timer from a first orthogonal frequency division multiplexing (OFDM) symbol after the uplink transmission ends; or
a pattern of starting the uplink DRX retransmission timer from an initial orthogonal frequency division multiplexing (OFDM) symbol of the uplink transmission; or
a pattern of starting the uplink DRX retransmission timer from a first orthogonal frequency division multiplexing (OFDM) symbol after a first retransmission of the uplink transmission; or
a pattern of starting the uplink DRX retransmission timer after generating a corresponding physical uplink shared channel (PUSCH) data packet according to a PDCCH indication; or
a pattern of starting the uplink DRX retransmission timer after a processing delay when data on the PDCCH are received.

16. The method according to claim 13, wherein starting the uplink DRX HARQ RTT timer according to the predetermined processing pattern comprises:
in response to an HARQ retransmission being disabled, starting the uplink DRX HARQ RTT timer according to the predetermined processing pattern; or
in response to an HARQ blind retransmission being allowed, starting the uplink DRX HARQ RTT timer according to the predetermined processing pattern; or
in response to a network configuring a timing period of the uplink DRX HARQ RTT timer to be a preset value, starting the uplink DRX HARQ RTT timer according to the predetermined processing pattern.

17. The method according to claim 13, wherein the predetermined processing pattern comprises:
a pattern of starting the uplink DRX HARQ RTT timer after receiving data on the PDCCH; or
a pattern of starting the uplink DRX HARQ RTT timer from a first orthogonal frequency division multiplexing (OFDM) symbol after the uplink transmission ends; or
a pattern of starting the uplink DRX HARQ RTT timer from an initial orthogonal frequency division multiplexing (OFDM) symbol of the uplink transmission; or
a pattern of starting the uplink DRX HARQ RTT timer from a first orthogonal frequency division multiplexing (OFDM) symbol after a first retransmission of the uplink transmission; or
a pattern of starting the uplink DRX HARQ RTT timer after generating a corresponding physical uplink shared channel (PUSCH) data packet according to a PDCCH indication; or
a pattern of starting the uplink DRX HARQ RTT timer after a processing delay when the PDCCH is received.

18. The method according to claim 2, further comprising:
determining the transmission type of the downlink transmission is the downlink transmission based on PDCCH dynamic scheduling; and
starting the DRX timer comprises:
starting a downlink DRX retransmission timer and/or a downlink DRX hybrid automatic repeat request (HARQ) round-trip-time (RTT) timer according to a predetermined processing pattern.

19. The method according to claim 18, wherein starting the downlink DRX retransmission timer according to the predetermined processing pattern comprises:
in response to an HARQ retransmission being disabled, starting the uplink DRX retransmission timer according to the predetermined processing pattern; or
in response to an HARQ blind retransmission being allowed, starting the uplink DRX retransmission timer according to the predetermined processing pattern; or
in response to a network configuring to disable the downlink DRX HARQ RTT timer starting the uplink DRX retransmission timer according to the predetermined processing pattern.

20. The method according to claim 18, wherein the predetermined processing pattern comprises:
a pattern of starting the downlink DRX retransmission timer after receiving data on the PDCCH; or
a pattern of starting the downlink DRX retransmission timer from a first orthogonal frequency division multiplexing (OFDM) symbol after the downlink transmission ends; or
a pattern of starting the downlink DRX retransmission timer from an initial orthogonal frequency division multiplexing (OFDM) symbol of the downlink transmission; or
a pattern of starting the downlink DRX retransmission timer from a first orthogonal frequency division multiplexing (OFDM) symbol after a first retransmission of the downlink transmission; or
a pattern of starting the downlink DRX retransmission timer after a processing delay when the PDCCH is received.

21. The method according to claim 18, wherein starting the downlink DRX HARQ RTT timer according to the predetermined processing pattern comprises:
in response to an HARQ retransmission being disabled, starting the downlink DRX HARQ RTT timer according to the predetermined processing pattern; or
in response to an HARQ blind retransmission being allowed, starting the downlink DRX HARQ RTT timer according to the predetermined processing pattern; or
in response to a network configuring a timing period of the downlink DRX HARQ RTT timer to be a preset value, starting the downlink DRX HARQ RTT timer according to the predetermined processing pattern.

22. The method according to claim 18, wherein the predetermined processing mode comprises:
a pattern of starting the downlink DRX HARQ RTT timer after receiving data on the PDCCH; or
a pattern of starting the downlink DRX HARQ RTT timer from a first orthogonal frequency division multiplexing (OFDM) symbol after the downlink transmission ends; or
a pattern of starting the downlink DRX HARQ RTT timer from an initial orthogonal frequency division multiplexing (OFDM) symbol of the downlink transmission; or
a pattern of starting the downlink DRX HARQ RTT timer from a first orthogonal frequency division multiplexing (OFDM) symbol after a first retransmission of the downlink transmission; or
a pattern of starting the downlink DRX HARQ RTT timer after a processing delay when the PDCCH is received.

23. The method according to claim 2, further comprising:
determining the transmission type of the downlink transmission is the downlink transmission based on configured downlink assignment; and
starting the DRX timer comprises:
starting a downlink DRX retransmission timer and/or a downlink DRX hybrid automatic repeat request (HARQ) round-trip-time (RTT) timer according to a predetermined processing pattern.

24. The method according to claim 23, wherein starting the downlink DRX HARQ RTT timer according to the predetermined processing pattern comprises:
in response to an HARQ retransmission being disabled, starting the downlink DRX HARQ RTT timer according to the predetermined processing pattern; or
in response to an HARQ blind retransmission being allowed, starting the downlink DRX HARQ RTT timer according to the predetermined processing pattern; or
in response to a network configuring to disable the downlink DRX HARQ RTT timer, starting the downlink DRX HARQ RTT timer according to the predetermined processing pattern.

25. The method according to claim 23, wherein the predetermined processing pattern comprises:
a pattern of starting the downlink DRX retransmission timer from a first orthogonal frequency division multiplexing (OFDM) symbol after the downlink transmission ends; or
a pattern of starting the downlink DRX retransmission timer from an initial orthogonal frequency division multiplexing (OFDM) symbol of the downlink transmission; or
a pattern of starting the downlink DRX retransmission timer from a first orthogonal frequency division multiplexing (OFDM) symbol after a first retransmission of the downlink transmission; or
a pattern of starting the downlink DRX retransmission timer after a processing delay when the PDSCH is received.

26. The method according to claim 23, wherein starting the downlink DRX HARQ RTT timer according to the predetermined processing pattern comprises:
in response to an HARQ retransmission being disabled, starting the downlink DRX HARQ RTT timer according to the predetermined processing pattern; or
in response to an HARQ blind retransmission being allowed, starting the downlink DRX HARQ RTT timer according to the predetermined processing pattern; or
in response to a network configuring to disable the downlink DRX HARQ RTT timer, starting the downlink DRX HARQ RTT timer according to the predetermined processing pattern.

27. The method according to claim 23, wherein the predetermined processing pattern comprises:
a pattern of starting the downlink DRX HARQ RTT timer from a first orthogonal frequency division multiplexing (OFDM) symbol after the downlink transmission ends; or
a pattern of starting the downlink DRX HARQ RTT timer from an initial orthogonal frequency division multiplexing (OFDM) symbol of the downlink transmission; or
a pattern of starting the downlink DRX HARQ RTT timer from a first orthogonal frequency division multiplexing (OFDM) symbol after a first retransmission of the downlink transmission; or
a pattern of starting the downlink DRX HARQ RTT timer after a processing delay when the PDSCH is received.

28. An apparatus for starting a DRX timer, comprising:
a processing module, configured to start the DRX timer according to a transmission type of an uplink transmission and/or a downlink transmission.

29. A communication device, comprising:
a memory; and
a processor connected to the memory, configured to perform computer-executable instructions stored on the memory, to perform the method of any one of claims 1 to 27.

30. A computer storage medium having stored thereon computer executable instructions that, when executed by a processor, the method of any one of claims 1 to 27 is performed.
